Europäisches Patentamt

European Patent Office

Office européen des brevets

(19)

(11) **EP 1 429 009 B1**

(12) **FASCICULE DE BREVET EUROPEEN**

(45) Date de publication et mention
de la délivrance du brevet:
**07.12.2005 Bulletin 2005/49**

(51) Int Cl.⁷: **F02D 35/02**, F02D 41/38

(21) Numéro de dépôt: **03300180.1**

(22) Date de dépôt: **28.10.2003**

(54) **Moteur diesel muni d'un dispositif de contrôle du débit d'injection de carburant**

Dieselmotor mit Vorrichtung zur Steuerung der Kraftstoffeinspritzmenge

Diesel engine with fuel injection quantity control apparatus

(84) Etats contractants désignés:
**AT BE BG CH CY CZ DE DK EE ES FI FR GB GR
HU IE IT LI LU MC NL PT RO SE SI SK TR**

(30) Priorité: **29.10.2002 FR 0213502**

(43) Date de publication de la demande:
**16.06.2004 Bulletin 2004/25**

(73) Titulaires:
• **Peugeot Citroen Automobiles SA
78943 Vélizy-Villacoublay Cedex (FR)**
• **Delphi Technologies, Inc.
Troy, MI 48007 (US)**

(72) Inventeurs:
• **Vermonet, Claire
75116 Paris (FR)**

• **Souchon, Vincent
75011 Paris (FR)**
• **Meissonnier, Guillaume
41190 Landes le Gaulois (FR)**

(74) Mandataire: **Grynwald, Albert et al
Cabinet Grynwald
94, rue Saint Lazare
75009 Paris (FR)**

(56) Documents cités:
**EP-A- 0 864 738     EP-A- 0 971 115
US-A- 4 513 714     US-A- 6 062 193
US-A- 6 102 005**

EP 1 429 009 B1

## Description

La présente invention se rapporte à un moteur diesel muni d'un dispositif de contrôle du débit d'injection de carburant.

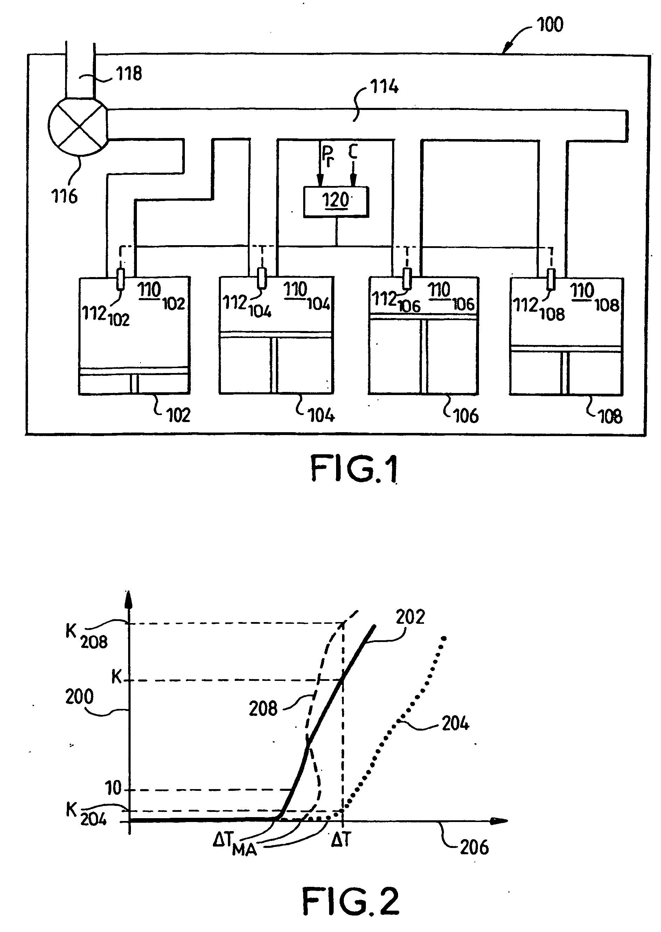

Dans un moteur 100 diesel (figure 1) à rampe commune 114, chaque cylindre 102, 104, 106 et 108 comporte une chambre de combustion $110_{102}$, $110_{104}$, $110_{106}$ ou $110_{108}$ dans laquelle est injecté un carburant au moyen d'un injecteur $112_{102}$, $112_{104}$, $112_{106}$ ou $112_{108}$ relié à la rampe commune 114. Dans cette dernière, le carburant est maintenu à haute pression par une pompe 116 connectée, via un conduit 118, au réservoir (non représenté) du véhicule, permettant ainsi d'effectuer des injections de carburant dans chaque cylindre à des pressions élevées, généralement comprises entre 200 et 1600 bars.

Le fonctionnement de chaque injecteur $112_i$ est contrôlé par une unité 120 qui commande la quantité de carburant injectée par cet injecteur dans la chambre $110_i$. Pour cela, cette unité 120 reçoit des informations telles que le couple C requis par le conducteur du véhicule ou la pression $P_r$ du carburant dans la rampe commune, et commande en conséquence une durée d'ouverture ou d'activation de l'injecteur $112_i$ telle que ce dernier injecte dans la chambre $110_i$ la quantité de carburant nécessaire à l'obtention du couple requis par le conducteur.

La durée d'activation d'un injecteur est fonction de la quantité de carburant devant être injectée, de la pression $P_r$ de carburant dans la rampe commune et des caractéristiques de l'injecteur. C'est pourquoi elle est prédéterminée par le constructeur, par exemple de façon empirique.

Toutefois, il est connu que le fonctionnement d'un injecteur équipant un véhicule présente des écarts par rapport au fonctionnement prédéterminé.

Le document EP 0 864 738 A2 décrit donc un système dans lequel une quantité injectée dans un cylindre est corrigé sur la base d'une mesure d'un temps de combustion qui est évalué à partir d'une observation d'un courant des ions dans la chambre de combustion.

Normalement, la prédétermination du fonctionnement d'un injecteur est effectuée au moyen d'un injecteur modélisé ne prenant en compte ni les tolérances acceptées lors de l'usinage des injecteurs, ni l'usure ou le vieillissement de ces derniers comme expliqué ci-dessous à l'aide de la figure 2 qui représente le fonctionnement d'injecteurs vieillis et d'un injecteur modélisé utilisé pour déterminer les données mémorisées dans l'unité 120.

Plus précisément, sur la figure 2 est représentée la quantité de carburant injectée (axe des ordonnées 200) dans la chambre de combustion d'un cylindre par l'injecteur modélisé (courbe 202) et par des injecteurs vieillis (courbes 204 et 208) équipant un véhicule, en fonction d'une durée (axe des abscisses 206) d'activation de ces injecteurs.

Dans cet exemple, on observe que le temps $\alpha T_{MA}$ minimal d'activation, correspondant au délai s'écoulant entre l'activation d'un injecteur et le début de l'injection, est plus important pour les injecteurs vieillis que pour l'injecteur modélisé. En outre, la pente de fonctionnement, c'est-à-dire la quantité de carburant injectée en fonction du temps, des injecteurs vieillis est distincte de celle de l'injecteur modélisé.

Ces écarts présentent des inconvénients pour le fonctionnement du moteur puisque les durées d'activation commandées par l'unité 28 provoquent l'injection d'une quantité de carburant dans les chambres de combustion distincte de la quantité optimale prédéterminée.

Par exemple, un délai d'activation $\alpha T$ est déterminé au moyen de l'injecteur modélisé pour obtenir une injection d'une quantité K de carburant tandis que la commande d'un premier injecteur usé (courbe 204) avec un tel délai entraînerait l'injection d'une quantité $K_{204}$ de carburant plus faible que la quantité requise et la commande du second injecteur (courbe 208) injecterait une quantité $K_{208}$ de carburant plus importante que cette quantité requise

Ces écarts d'injection provoquent une baisse des performances (couple, puissance) du moteur, une augmentation du bruit de combustion et/ou une augmentation des émissions polluantes du moteur, en particulier des oxydes d'azote.

Ces problèmes peuvent concerner l'ensemble des cylindres d'un moteur ou chaque cylindre séparément.

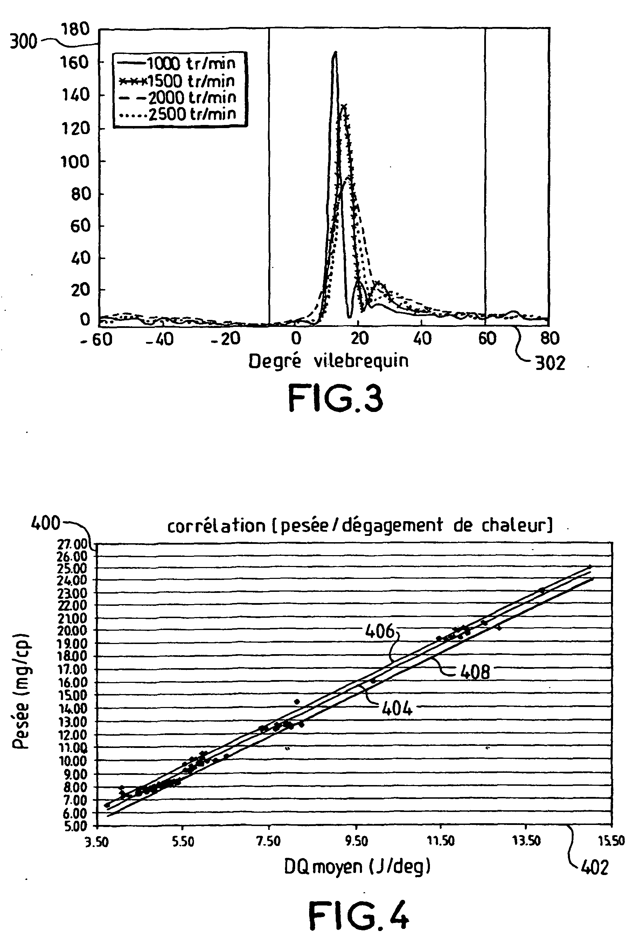

La présente invention résulte de la constatation que la mesure de la chaleur dégagée dans un cylindre par une injection de carburant est un paramètre optimal pour déterminer la quantité de carburant injectée dans ce cylindre, comme expliqué et décrit ci-dessous à l'aide des figures 3, 4 et 5.

Le dégagement DQ de chaleur effectué dans une chambre de combustion peut être déterminé à partir du premier principe de la thermodynamique appliqué au système composé par le mélange gazeux d'air et de carburant injecté dans le cylindre :

$$\frac{dU}{d\alpha} = \frac{dW}{d\alpha} + \frac{dQ}{d\alpha} \tag{1}$$

où dU, dQ et dW représentent respectivement la variation d'énergie, de chaleur et de travail du mélange considéré et d$\alpha$ représente la variation de l'angle $\alpha$ du piston considéré, c'est-à-dire l'avancement du cycle de fonctionnement du cylindre.

**EP 1 429 009 B1**

Le mélange étant assimilé à un gaz parfait, on peut écrire:

$$\frac{dU}{d\alpha} = n * Cv * \frac{dT}{d\alpha} \qquad (2)$$

et

$$PV = nRT \qquad (3)$$

où n est le nombre de moles du mélange, Cv sa capacité calorifique, dT sa variation de température et P, V et T sont respectivement sa pression, son volume et sa température, R étant une constante égale à 8,314.

Le travail élémentaire du mélange en extension étant égal à :

$$\frac{dW}{d\alpha} = \frac{- PdV}{d\alpha},$$

la relation (1) devient :

$$\frac{dQ}{d\alpha} = n * Cv * \frac{dT}{d\alpha} + \frac{PdV}{d\alpha} \qquad (1bis).$$

En différenciant (3) on obtient alors

$$n * \frac{dT}{d\alpha} = (P * \frac{dV}{d\alpha} + V * \frac{dP}{d\alpha})/R,$$

ce qui permet de développer l'équation (1bis) en

$$\frac{dQ}{d\alpha}(Cv/R+1) * P * \frac{dV}{d\alpha} + Cv/R * \frac{VdP}{d\alpha} \qquad (1ter).$$

Pour un gaz parfait, on a la relation $Cv/R=1/(\gamma-1)$ avec $\gamma$ coefficient polytropique, $\gamma \approx 1.34$, qui permet d'obtenir, à partir de (1ter) :

$$\frac{dQ}{d\alpha} = 1/(\gamma-1)*(\gamma P*\frac{dV}{d\alpha} + V*\frac{dP}{d\alpha}) \qquad (4)$$

dQ se décompose en $dQ = dQ_{combustion} + dQ_{parois}$ où $dQ_{combustion}$ représente la chaleur reçue par le mélange lors de la combustion et $dQ_{parois}$ la chaleur perdue aux parois. Dans un premier temps, on néglige le terme $dQ_{parois}$.

Il apparaît donc qu'en mesurant la pression dans le cylindre, il est possible de déterminer des dégagements de chaleur élémentaires à un instant donné.

A partir de ces données, la détermination de la quantité de carburant injectée lors de l'injection principale peut être effectuée en évaluant le dégagement DQ de chaleur moyen sur un intervalle centré par rapport à l'injection principale du moteur comme montré sur la figure 3 qui représente les dégagements de chaleur (axe des ordonnées 300), en joules par degré $\alpha$ de vilebrequin (axe des abscisses 302), déterminés pour différents régimes moteurs.

Comme précédemment décrit, de telles mesures de dégagements de chaleur sont obtenues à partir de mesures de la pression dans la chambre de combustion, par exemple au moyen d'un capteur intégré dans la culasse ou dans la bougie de préchauffage.

Il convient de souligner que les valeurs du volume de la chambre de combustion sont déterminées en fonction de la position du piston, c'est-à-dire de la valeur $\alpha$ de degré vilebrequin du piston.

On rappelle qu'une valeur $\alpha$ de degrés vilebrequin nulle correspond au point mort haut du piston considéré, les valeurs négatives correspondant à un déplacement de ce piston vers le point mort haut tandis qu'une valeur positive des degrés de vilebrequin correspond à un déplacement du piston vers le point mort bas.

Sur la figure 4 sont représentées des mesures relatives à la quantité de carburant injectée (axe 400 des ordonnées), en mg/cycle moteur, dans les cylindres d'un moteur en fonction du dégagement de chaleur mesuré (axe des abscisses 402), en joules/degré vilebrequin selon le procédé décrit à l'aide de la figure 3, c'est-à-dire à partir de mesures de pression dans les chambres de combustion de ces cylindres.

Ces mesures de carburant, obtenues en pesant au moyen d'une balance la quantité de carburant consommée, sont effectuées à l'aide d'un moteur dont les conditions de fonctionnement (régime moteur, taux de recyclage des gaz d'échappement, pression de suralimentation, avance à l'injection et/ou température au collecteur d'admission) sont fortement modifiées au cours des mesures.

On observe que le dégagement de chaleur DQ mesuré est linéaire (courbe 404) par rapport à la quantité de carburant introduite dans le cylindre tandis que l'erreur d'estimation pour différentes quantités de carburant injectées, représentée par l'écart entre les valeurs maximales (courbe 406) et minimales (courbe 408), reste faible, de l'ordre de 0,5 mg pour les différentes consignes K de carburant à injecter.

En d'autres termes, l'erreur relative de la mesure par rapport à la quantité K injectée étant d'autant plus faible que la quantité de carburant injectée est importante, la détermination de la quantité de carburant injectée est particulièrement adaptée pour contrôler les injections de carburants importantes, par exemple correspondant à l'injection principale fournissant le couple moteur.

Il convient de remarquer que les fortes modifications, ou dérives des conditions de fonctionnement du moteur, correspondent à des variations extrêmes, telles que l'ouverture ou la fermeture complète du recyclage de gaz d'échappement, de la température du moteur et de la pression de suralimentation.

Dès lors, les variations de fonctionnement du moteur lors d'un fonctionnement normal étant moins importantes, l'erreur sur la détermination de la quantité K de carburant injectée est, en pratique, inférieure à cette marge d'erreur expérimentale.

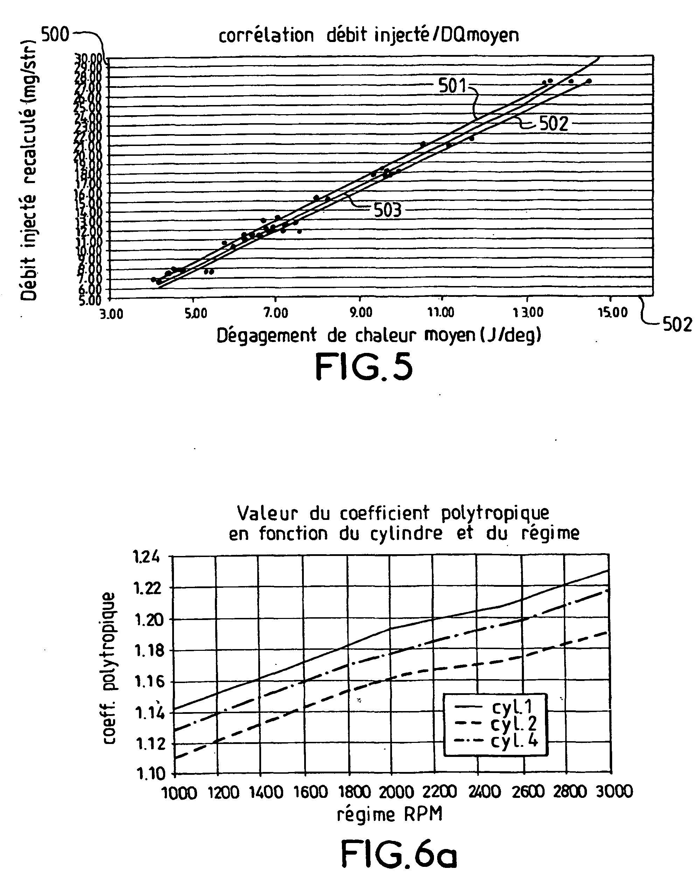

Sur la figure 5 sont représentées des évaluations de carburant injecté (axe des ordonnées 500), en mg/cycle moteur, en fonction de dégagements DQ de chaleur mesurés (axe des abscisses 502), en joules/degré de vilebrequin, pour chacun des trois cylindres testés d'un moteur à quatre cylindres, les mesures associées à chaque cylindre i étant représentées par une courbe $500_i$.

On observe que la linéarité et la faible dispersion des mesures remarquées à la figure 4 sont détectées dans les estimations propres à chaque cylindre de telle sorte qu'une stratégie de correction pour chaque cylindre peut être considérée.

De plus, chaque cylindre présente un rapport égal entre le débit injecté et le dégagement DQ de chaleur moyen, seule une déviation verticale variant d'un cylindre à un autre.

Une telle variation est due aux écarts du coefficient polytropique γ de chaque cylindre liés à la disparité de leurs caractéristiques techniques telles que leurs taux de compression ou la perméabilité de leurs soupapes.

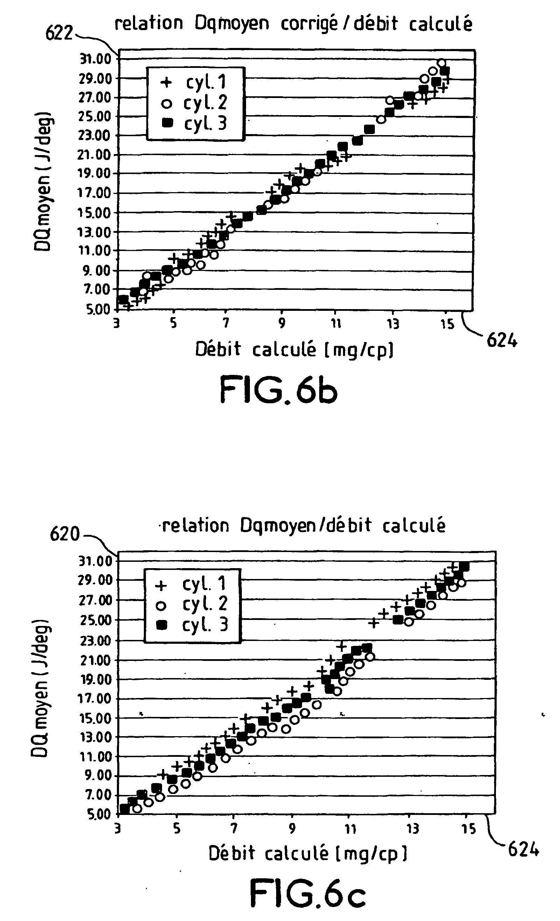

C'est pourquoi, comme montré à la figure 6, il convient d'évaluer le coefficient polytropique yi pour chacun des trois cylindres i testés, par exemple suivant la formule

$$\gamma i = -\frac{\log(p_1/p_2)}{\log(v_1/v_2)}$$

où $p_1$ et $p_2$ représentent la pression dans le cylindre i aux angles -20° par rapport au point mort haut et -5° par rapport au point mort haut, tandis que les volumes $v_1$ et $v_2$ représentent le volume dans le cylindre i aux angles -20° par rapport au point mort haut et -5° par rapport au point mort haut.

Par la suite, on améliore la détermination de la mesure dQ de chaleur de chaque cylindre en ajoutant à cette mesure un terme α(γi-γo) correctif où α représente l'angle de piston et γo est le coefficient polytropique moyen idéal d'un cylindre, à cette mesure.

L'effet d'un tel terme correctif est montré à l'aide des figures 6b et 6c relative à des mesures de dégagement de chaleur (axe 620 des ordonnées en joules par degré) en fonction du débit de carburant calculé (axe 622 des abscisses en mg).

On observe alors que, lorsque le terme correctif α(γi-γo) est appliqué (figure 6b), les écarts entre les mesures propres à chaque cylindre sont moindres que lorsque ce terme n'est pas appliqué (figure 6c).

En d'autres termes, on obtient des rapports similaires entre les variations dQ de chaleur et le débit de carburant, ce qui facilite les calculs décrits ultérieurement à l'aide de ces coefficients.

La faible sensibilité des mesures de dégagement de chaleur vis-à-vis du régime moteur et de la pression d'injection est représentée ci-dessous à l'aide du tableau 1.

Tableau 1

| Débit[mg] | Régime [RPM] | Pr [bar] | Erreur |
|---|---|---|---|
| **10** | **1000** | **360** | 0,32 |

Tableau 1   (suite)

| Débit[mg] | Régime [RPM] | Pr [bar] | Erreur |
|-----------|--------------|----------|--------|
| 14        | "            | "        | 0,44   |
| 10        | 1500         | 600      | 0,19   |
| 14        | "            | "        | 0,35   |
| 10        | 2000         | 680      | 0,20   |
| 14        |              |          | 0,46   |
| 10        | 2500         | 750      | 0,20   |
| 14        | "            | "        | 0,50   |
| 16        | 2100         | 900      | 0,46   |
| 20        | "            | "        | 0,67   |
| 16        | 3000         | 1000     | 0,61   |
| 20        | "            | "        | 0,70   |
| 25        | 3000         | 1200     | 0,73   |
| 30        | 3500         | 1400     | 0,79   |

Dans ce tableau 1 sont représentées des estimations (colonne «Erreur»), en mg, de l'écart entre la quantité de carburant injectée et la quantité de carburant estimée injectée selon un procédé conforme à l'invention pour différentes quantités commandées (colonne « débit[mg]»).

Cet écart est évalué pour différents régimes (colonne « régime[RPM]») et pressions d'injection (colonne «Pr [bar] »).

Il apparaît que les fortes variations du régime, de la pression d'injection ou de la quantité de carburant commandée ne modifient pas de façon importante l'erreur sur l'évaluation de la quantité de carburant injectée.

En résumé, la mesure du dégagement de chaleur dans une chambre de combustion est un moyen fiable et précis pour mesurer la quantité de carburant injectée, le dégagement de chaleur étant proportionnel à la quantité de carburant injecté.

En outre, une mesure du dégagement de chaleur est peu sensible à des variations de paramètres relatifs au fonctionnement du moteur autre que la quantité de carburant injectée.

C'est pourquoi, l'invention concerne un moteur diesel muni d'un dispositif contrôlant l'injection de carburant dans un cylindre au moyen d'un processeur commandant un injecteur du cylindre, caractérisé en ce que le dispositif comprend des moyens pour mesurer un dégagement de chaleur généré par une injection commandée, des moyens pour déterminer un écart entre la quantité de carburant commandée et la quantité de carburant injectée, évaluée à partir du dégagement de chaleur mesuré, et des moyens pour commander l'injecteur en fonction de cet écart.

Grâce à l'invention, il est ainsi possible de corriger des écarts de fonctionnement d'un injecteur par une mesure de dégagement de chaleur, fonction de la quantité de carburant réellement injectée dans le cylindre.

Dès lors, la correction des écarts d'injection selon l'invention présente les avantages précédemment identifiés, à savoir que la mesure des dégagements de chaleur est fortement sensible à la quantité de carburant injectée et faiblement modifiée par des variations d'autres paramètres de fonctionnement du moteur.

Dans un mode de réalisation, l'écart est déterminé en comparant le dégagement ($DQ_{mes}$) mesuré avec un dégagement ($DQ_{pré}$) de chaleur prédéterminé.

Dans une réalisation, l'écart est déterminé en comparant une quantité de carburant injectée associée à un dégagement de chaleur mesuré, avec une quantité de carburant prédéterminée, associée à un dégagement de chaleur prédéterminé.

Dans ce cas, l'écart de fonctionnement de l'injecteur est déterminé comme l'écart entre la quantité de carburant réellement admise et la quantité de carburant commandée. Il est possible de commander l'injecteur de façon à corriger cet écart afin que la quantité de carburant admise corresponde à la quantité de carburant commandée.

Selon une réalisation, le dispositif comprend des moyens pour mesurer le dégagement de chaleur à partir de mesures de la pression dans la chambre de combustion du cylindre.

Dans une réalisation, le dispositif comprend des moyens pour effectuer des mesures de pression pendant une durée au cours de laquelle s'effectue l'injection principale de carburant dans le cylindre.

Selon une réalisation, le dispositif comprend des moyens pour que la durée corresponde à un avancement du cycle moteur d'au moins soixante degrés vilebrequin.

Selon une réalisation, le dispositif comprend des moyens pour mesurer le dégagement de chaleur à partir de dégagements élémentaires déterminés au moyen de la formule :

$$\frac{dQ}{d\alpha} = aV\,\frac{dP}{d\alpha} + bP\,\frac{dV}{d\alpha},$$

où dP représente une variation de pression dans la chambre de combustion du cylindre, dV représente une variation du volume de la chambre de combustion, $d\alpha$ représente l'avancement du cycle de fonctionnement du cylindre et a et b sont des paramètres constants au cours de la détermination du dégagement de chaleur.

Selon un mode de réalisation, le dispositif comprend des moyens pour déterminer les paramètres a et b en fonction du coefficient polytropique $\gamma$ du cylindre défini comme :

$$\gamma = \frac{-\log(P/P_2)}{\log(V/V_2)}.$$

où $P_1$ et $V_1$ représentent la pression et le volume du cylindre à un premier instant et $P_2$ et $V_2$ représentent la pression et le volume du cylindre à un second instant, au moyen des formules :

$$a = \gamma/(\gamma-1)$$

$$b = 1/(\gamma-1)$$

Dans un mode de réalisation, le dispositif comprend des moyens pour commander une pluralité d'injections de carburants identiques, des moyens pour mesurer un dégagement de chaleur propre à chaque injection et des moyens pour associer un dégagement de chaleur à l'injection répétée correspondant à la moyenne des dégagements de chaleur mesurés à chaque injection.

Selon un mode de réalisation, le dispositif comprend des moyens pour mémoriser les dégagements de chaleur mesurés, par exemple sous la forme d'une cartographie, en fonction de la durée d'activation de l'injecteur utilisé pour déterminer ce dégagement.

Dans une réalisation, une durée d'activation commandée étant associée à un dégagement de chaleur prédéterminé, le dispositif comprend des moyens pour modifier une durée d'activation commandée en fonction de l'écart entre cette dernière et la durée utilisée pour mesurer un dégagement de chaleur identique au dégagement de chaleur prédéterminé associé à la durée commandée.

Selon une réalisation, le dispositif comprend des moyens pour mesurer un dégagement de chaleur en fonction de la pression d'injection et de la quantité de carburant commandées.

Selon une réalisation, le dispositif comprend des moyens d'inhibition d'une injection pilote pendant un cycle moteur au cours duquel est mesuré un dégagement de chaleur.

Dans une réalisation, le moteur comprend des moyens pour commander des injections de carburant supérieures à 10 mg.

Dans une réalisation, le moteur comprend une rampe commune d'alimentation de différents cylindres.

D'autres caractéristiques et avantages de l'invention apparaîtront avec la description de certains de ses modes de réalisation effectuée ci-dessous, à titre non limitatif, en se référant aux dessins ci-annexés sur lesquels :

- la figure 1, déjà décrite, représente un moteur à rampe commune,
- la figure 2, déjà décrite, représente les variations d'injection entre un injecteur modélisé et des injecteurs usés,
- la figure 3, déjà décrite, représente des mesures de dégagement de chaleur en fonction de l'avancement du cycle de combustion dans un moteur,
- les figures 4 et 5, déjà décrites, représentent la corrélation entre des dégagements de chaleur mesurés et des quantités de carburant injectées,
- les figures 6, 6b et 6c, déjà décrites, représentent des variations du coefficient polytropique associées au mélange de carburant introduit dans les cylindres et l'influence d'une correction de ces variations dans les mesures de chaleur,
- la figure 7 représente des dérives de fonctionnement d'injecteurs de carburant en fonction de la pression et de la quantité de carburant commandée et la modélisation de ces dérives selon une réalisation de l'invention,
- la figure 8 représente une suite d'opérations corrigeant les durées d'activation d'un injecteur conformément à une réalisation de l'invention,

- la figure 9 représente une suite d'opérations pour établir une cartographie conforme à l'invention,
- la figure 10 représente une linéarisation de données conforme à une réalisation de l'invention,
- la figure 11 représente une variante de l'invention commandant un injecteur à partir de calculs propres à des débits commandés et mesurés, et
- la figure 12 représente une mise en oeuvre de la variante décrite à la figure 11.

Conformément à l'invention, la réalisation de l'invention décrite ci-dessous concerne un moteur diesel muni d'un dispositif à injecteur comprenant des moyens pour mesurer un dégagement de chaleur généré par une injection de carburant, des moyens pour comparer ce dégagement mesuré avec un dégagement de chaleur prédéterminé et des moyens pour commander l'injecteur en fonction de cette comparaison.

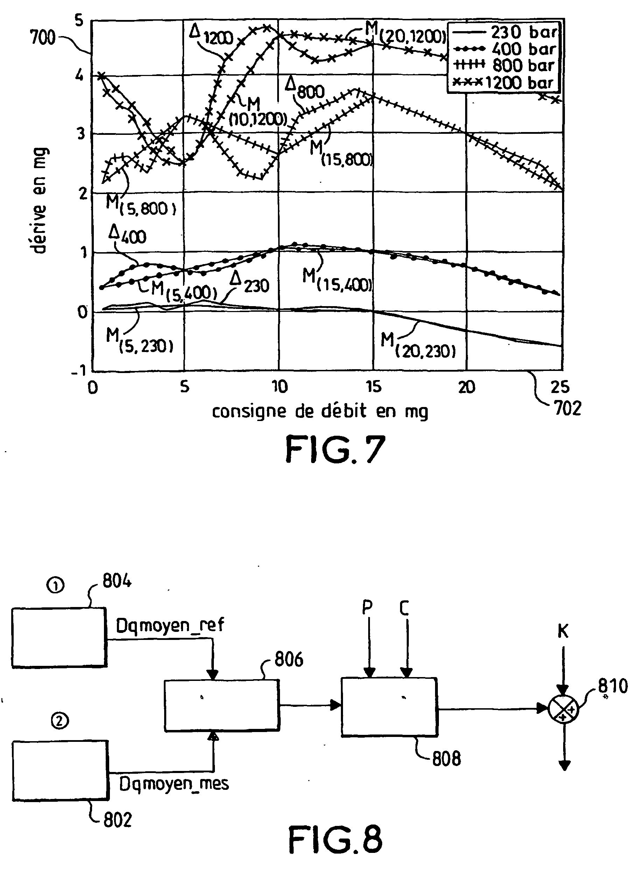

Une première analyse de ce moteur est montrée à la figure 7, où sont représentées des mesures de dérives ou d'écarts de fonctionnement d'un injecteur pour différentes pressions Pr d'injection, à savoir 230 bars, 400 bars, 800 bars et 1200 bars.

La dérive correspondant à chaque pression i est représentée par une courbe $\alpha_{Pr}$ établi e selon un axe 700 des ordonnées (en mg) en fonction des différentes quantités de carburant commandées (axe des abscisses 702, en mg).

On observe que la dérive de l'injecteur varie fortement en fonction de la pression $P_r$ d'injection du carburant ainsi que de la quantité K de carburant commandée.

C'est pourquoi, dans cette réalisation de l'invention, la correction de la dérive d'un injecteur est effectuée en fonction de la pression $P_r$ à l'injection et de la quantité K de carburant commandée à cet injecteur.

A cet effet, différentes mesures de dégagement de chaleur sont effectuées pour différentes pression $P_r$ d'injection et pour différentes consignes de débit comme représenté sur le tableau 2 ci-dessous.

Tableau 2

| Consigne de débit en (mg) | Consigne de pression rail (bar) | | | | | |
|---|---|---|---|---|---|---|
| | 230 | 400 | 600 | 800 | 1000 | 1200 |
| 5 | (5,230 ) | (5,400 ) | ..... | ..... | ..... | ..... |
| 10 | ..... | ..... | ..... | ..... | ..... | ..... |
| 15 | ..... | ..... | ..... | ..... | ..... | ..... |
| 20 | ..... | ..... | ..... | ..... | ..... | ..... |
| 25 | | | (25,600 ) | (25,800 ) | (25,1000 ) | (25,1200 ) |

Un tel tableau 2 représente une cartographie des mesures de dégagements de chaleur dans la chambre de combustion alimentée par l'injecteur testé en fonction de la consigne K et de la pression $P_r$ d'injection.

A l'aide d'une telle cartographie, il est possible de connaître la valeur du dégagement de chaleur ($DQ_{K,Pr}$) mesuré pour une consigne K (5, 10, 15, 20 et 25 mg) et pour une pression $P_r$ à l'injection (230, 400, 600, 800, 1000 et 1200) déterminées.

De fait, comme montré à la figure 7, les dégagements de chaleur mesurés en fonction de la consigne K peuvent être modélisés par des segments $M_{(K,Pr)}$ continus définis, à ces extrémités, par les mesures de dégagements de chaleur suivant un écart de 5 mg.

A partir d'une telle cartographie, il est possible de déterminer l'écart entre la quantité de carburant commandée et la quantité de carburant réellement injectée par un injecteur, puis de corriger cet écart comme montré ci-dessous à l'aide de la figure 8.

Sur cette figure 8 est représentée une cartographie 802 utilisant des mesures de dégagements $DQ_{mes}$ de chaleur de l'injecteur considéré, par exemple telles que déterminées dans le tableau 2, et une cartographie 804 prédéterminée, identifiant des dégagements $DQ_{pré}$ de chaleur définis au moyen du fonctionnement modélisé de l'injecteur.

En comparant (opération 806) les dégagements $DQ_{mes}$ de chaleur mesurés aux dégagements $DQ_{pre}$ de chaleurs prédéterminés, pour une même consigne K et une même pression Pr d'injection, une différence de dégagement de chaleur $DQ_{mes} - DQ_{pré}$ peut être définie.

Cette différence $DQ_{mes} - DQ_{pré}$ correspond à un écart DK de quantité de carburant injectée qui peut se traduire en un délai Dt d'activation, positif ou négatif, correspondant à l'écart de fonctionnement de l'injecteur.

A cet effet, on multiplie l'écart DK de quantité de carburant injectée par un coefficient $C_k$ correspondant à la

pente de la courbe reliant le dégagement de chaleur à la quantité de carburant injectée (figure 5).

Les écarts Dt d'activation sont calculés pour les différentes valeurs de pression Pr d'injection et de quantité K de carburant commandées de telle sorte que, lorsqu'un délai $\alpha$t d'activation est commandé à l'injecteur, la pression Pr d'injection et la consigne K sont prises en compte pour déterminer (opération 808) l'écart Dt utilisé pour corriger (bloc 810) le délai $\alpha$t commandé.

Il convient de signaler que, comme décrit ultérieurement dans une réalisation de l'invention, les écarts DK de consigne peuvent être directement utilisés pour corriger la consigne K appliquée.

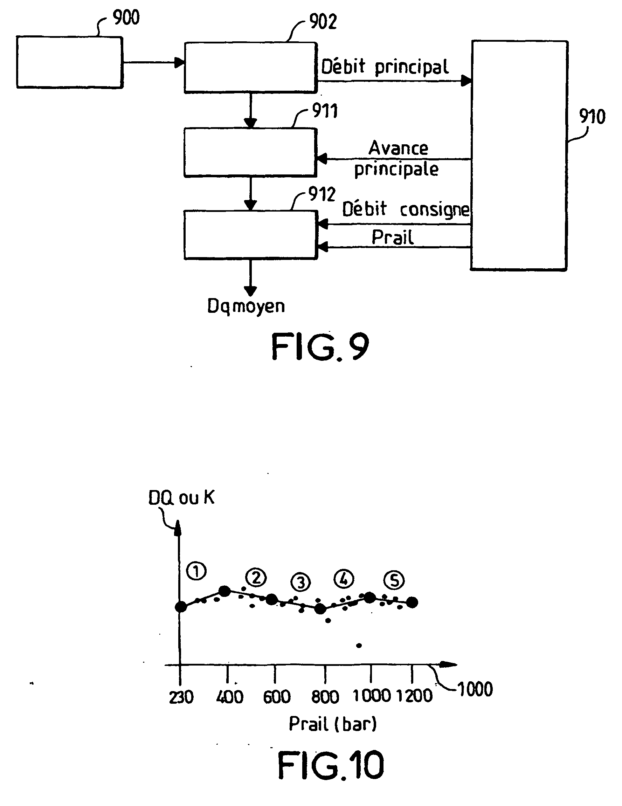

Sur la figure 9 sont représentées diverses opérations effectuées lors de la mesure d'un dégagement de chaleur.

Dans un premier temps, lorsqu'une mesure de dégagement de chaleur est commandée (bloc 900), par exemple de façon horaire, la consigne de l'injection principale est égalée à la valeur K (bloc 902) pour laquelle une mesure est requise tandis que la consigne de l'injection pilote, utilisée pour établir des conditions de combustion optimales dans le cylindre, est mise à zéro.

Dans un deuxième temps, les paramètres de mesure des dégagements de chaleur sont établis (bloc 910) de telle sorte que le dégagement de chaleur soit évalué sur une moyenne de 60 degrés vilebrequin (bloc 911).

Dans un troisième temps (bloc 912), la consigne K de carburant injecté est appliquée tandis que la pression Pr d'injection est maintenue à une des valeurs de mesures précédemment définies pendant que les mesures de dégagements de chaleur sont effectuées.

Dans cette réalisation de l'invention, chaque mesure du dégagement de chaleur $DQ_{mes}$ (Pr, K), correspondant à une pression d'injection Pr et à une consigne K, résulte de la moyenne de dix valeurs mesurées.

De fait, comme montré sur la figure 10, les mesures 100 de dégagements de chaleur sont linéarisées de façon à disposer d'une mesure de dégagement de chaleur $DQ_{mes}$(Pr, K) pour toute pression d'injection. Dans cette réalisation, ces mesures sont linéarisées suivant des intervalles de 200 bars.

Il convient de signaler que la cartographie des mesures de dégagements est effectuée cylindre par cylindre.

Par ailleurs, lors des mesures des dégagements de chaleur, un filtre est utilisé de façon à éliminer les perturbations dues aux vibrations du moteur.

La présente invention est susceptible de nombreuses variantes. Par exemple, les opérations de détermination des écarts de fonctionnement peuvent être effectuées en comparant une (ou plusieurs) mesure(s) du débit de carburant injecté par rapport au(x) débit(s) commandé(s) (consignés) de façon à corriger les délais d'activation d'un injecteur d'une durée correspondant à l'écart mesuré.

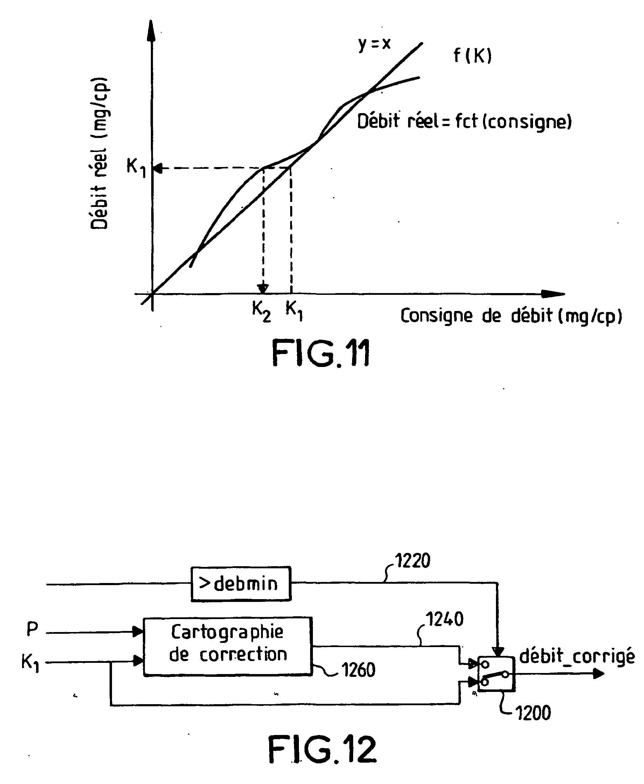

A cet effet, comme montré à la figure 11, on peut déterminer et utiliser la relation f (K) entre la quantité de carburant commandée ($K_1$) et la quantité de carburant réellement admise ($K_2$), déterminée au moyen du dégagement de chaleur comme précédemment indiqué, de telle sorte que, lorsqu'une consigne $K_1$ de carburant est commandée, la consigne de débit $K_2$ soit réellement prise en compte.

Un tel contrôle des débits commandés peut être mis en oeuvre au moyen d'un correcteur 1200 (figure 12) corrigeant la consigne 1220 commandée par un terme 1240 correcteur ($K_1$-$K_2$), égal à l'écart entre la quantité de carburant commandé et la quantité de carburant réellement injecté, déterminé au moyen d'une cartographie 1260.

Un tel écart DK peut être déterminé à partir d'une cartographie, telle que décrite à la figure 11, obtenue de façon analogue à la cartographie décrite à la figure 7 à partir des écarts mesurés entre le dégagement de chaleur mesuré et le dégagement de chaleur prédéterminé pour une consigne de carburant donnée.

Dans ce cas, les opérations décrites aux figures 8 et 9 sont effectuées en considérant l'écart dK de consigne de carburant à la place de l'écart dQ de dégagement de chaleur, de façon à établir leur relation (figure 10) entre la pression de carburant dans la rampe commune (axe 1000, en bars) et le débit de carburant injecté.

**Revendications**

1. Moteur diesel muni d'un dispositif contrôlant l'injection de carburant dans un cylindre au moyen d'un processeur commandant un injecteur du cylindre, **caractérisé en ce que** le dispositif comprend des moyens (802) pour mesurer un dégagement ($DQ_{mes}$) de chaleur généré par une injection commandée, des moyens (808) pour déterminer l'écart entre la quantité de carburant commandée et la quantité de carburant injectée, évaluée à partir de ce dégagement mesuré et des moyens (810) pour commander l'injecteur en fonction de cet écart.

2. Moteur selon la revendication 1 **caractérisé en ce que** l'écart est déterminé en comparant le dégagement ($DQ_{mes}$) mesuré avec un dégagement ($DQ_{pré}$) de chaleur prédéterminé.

3. Moteur selon la revendication 1 **caractérisé en ce que** l'écart est déterminé en comparant la quantité de carburant injectée, déterminée à partir du dégagement de chaleur mesuré, avec la quantité de carburant commandée.

**4.** Moteur selon la revendication 1, 2 ou 3 **caractérisé en ce que** le dispositif comprend des moyens pour mesurer le dégagement ($DQ_{mes}$) de chaleur à partir de mesures de la pression dans la chambre de combustion du cylindre.

**5.** Moteur selon la revendication 4 **caractérisé en ce que** le dispositif comprend des moyens pour effectuer des mesures de pression pendant une durée au cours de laquelle s'effectue l'injection principale de carburant dans le cylindre.

**6.** Moteur selon la revendication 5 **caractérisé en ce que** le dispositif comprend des moyens pour que la durée corresponde à un avancement du cycle moteur d'au moins soixante degrés vilebrequin.

**7.** Moteur selon l'une des revendications précédentes **caractérisé en ce que** le dispositif comprend des moyens pour mesurer le dégagement ($DQ_{mes}$) de chaleur à partir de dégagements élémentaires ($dQ_{mes}$) déterminés au moyen de la formule :

$$\frac{dQ}{d\alpha} = aV\frac{dP}{d\alpha} + bP\frac{dV}{d\alpha},$$

où dP représente une variation de pression dans la chambre de combustion du cylindre, dV représente une variation du volume de la chambre de combustion, $d\alpha$ représente l'avancement du cycle de fonctionnement du cylindre et a et b sont des paramètres constants au cours de la détermination du dégagement ($DQ_{mes}$) de chaleur.

**8.** Moteur selon la revendication 7 **caractérisé en ce que** le dispositif comprend des moyens pour déterminer les paramètres a et b en fonction du coefficient polytropique $\gamma$ du cylindre défini comme :

$$\gamma = \frac{-\log(P_1/P_2)}{\log(V_1/V_2)}.$$

où $P_1$ et $V_1$ représentent la pression et le volume du cylindre à un premier instant et $P_2$ et $V_2$ représentent la pression et le volume du cylindre à un second instant, au moyen des formules :

$$a = \gamma/(\gamma-1)$$

$$b = 1/(\gamma-1)$$

**9.** Moteur selon l'une des revendications précédentes **caractérisé en ce que** le dispositif comprend des moyens pour commander une pluralité d'injections de carburants identiques, des moyens pour mesurer un dégagement de chaleur propre à chaque injection et des moyens pour associer un dégagement ($DQ_{mes}$) de chaleur à l'injection répétée correspondant à la moyenne des dégagements ($DQ_{mes}$) de chaleur mesurés à chaque injection.

**10.** Moteur selon l'une des revendications précédentes **caractérisé en ce que** le dispositif comprend des moyens pour mémoriser les dégagements de chaleur mesurés, par exemple sous la forme d'une cartographie, en fonction de la durée d'activation de l'injecteur utilisé pour déterminer ce dégagement.

**11.** Moteur selon la revendication 10 **caractérisé en ce que**, une durée d'activation commandée étant associée à un dégagement de chaleur prédéterminé, le dispositif comprend des moyens pour modifier une durée d'activation commandée en fonction de l'écart entre cette dernière et la durée utilisée pour mesurer un dégagement de chaleur identique au dégagement de chaleur prédéterminé associé à la durée commandée.

**12.** Moteur selon l'une des revendications précédentes **caractérisé en ce que** le dispositif comprend des moyens pour mesurer un dégagement de chaleur en fonction de la pression d'injection et de la quantité de carburant commandées.

**13.** Moteur selon l'une des revendications précédentes **caractérisé en ce que** le dispositif comprend des moyens d'inhibition d'une injection pilote pendant un cycle moteur au cours duquel est mesuré un dégagement de chaleur.

**14.** Moteur selon l'une des revendications précédentes **caractérisé en ce qu'**il comprend des moyens pour commander des injections de carburant supérieures à 10 mg.

**15.** Moteur selon l'une des revendications précédentes **caractérisé en ce qu'**il comprend une rampe commune d'alimentation des différents cylindres.

**Patentansprüche**

**1.** Dieselmotor mit Vorrichtung zur Steuerung der Kraftstoffeinspritzung in einen Zylinder mittels eines Prozessors, der eine Zylindereinspritzdüse steuert, **dadurch gekennzeichnet, daß** die Vorrichtung Mittel (802) zum Messen einer Abstrahlung ($DQ_{mes}$) von Wärme, die durch eine gesteuerte Einspritzung erzeugt wird, Mittel (808) zum Bestimmen des Unterschieds zwischen der gesteuerten Kraftstoffmenge und der eingespritzten Kraftstoffmenge, die anhand dieser gemessenen Abstrahlung bewertet wird, sowie Mittel (810) zum Regeln der Einspritzdüse in Abhängigkeit von diesem Unterschied umfaßt.

**2.** Motor gemäß Anspruch 1, **dadurch gekennzeichnet, daß** der Unterschied durch Vergleichen der gemessenen Abstrahlung ($DQ_{mes}$) mit einer vorbestimmten Wärmeabstrahlung ($DQ_{pré}$) bestimmt wird.

**3.** Motor gemäß Anspruch 1, **dadurch gekennzeichnet, daß** der Unterschied durch Vergleichen der aus der gemessenen Wärmeabstrahlung bestimmten eingespritzten Kraftstoffmenge mit der gesteuerten Kraftstoffmenge bestimmt wird.

**4.** Motor gemäß Anspruch 1, 2 oder 3, **dadurch gekennzeichnet, daß** die Vorrichtung Mittel zum Messen der Wärmeabstrahlung ($DQ_{mes}$) aus Messungen des Drucks im Brennraum des Zylinders umfaßt.

**5.** Motor gemäß Anspruch 4, **dadurch gekennzeichnet, daß** die Vorrichtung Mittel zur Durchführung der Druckmessungen während einer Zeitspanne beinhaltet, in der die hauptsächliche Kraftstoffeinspritzung in den Zylinder erfolgt.

**6.** Motor gemäß Anspruch 5, **dadurch gekennzeichnet, daß** die Vorrichtung Mittel beinhaltet, damit die Zeitspanne dem Fortschreiten eines Motorzyklus um mindestens sechzig Grad der Kurbelwelle entspricht.

**7.** Motor gemäß einem der vorstehenden Ansprüche, **dadurch gekennzeichnet, daß** die Vorrichtung Mittel zum Messen der Wärmeabstrahlung ($DQ_{mes}$) anhand der grundlegenden Abstrahlungen ($dQ_{mes}$) umfaßt, die gemäß der Formel:

$$\frac{dQ}{d\alpha} = aV\,\frac{dP}{d\alpha} + bP\,\frac{dV}{d\alpha}$$

bestimmt werden, wobei dP eine Druckänderung im Brennraum des Zylinders, dV eine Volumenänderung des Brennraums, $d\alpha$ das Fortschreiten des Arbeitsspiels des Zylinders, und a und b konstante Parameter im Verlauf der Bestimmung der Wärmeabstrahlung ($DQ_{mes}$) darstellen.

**8.** Motor gemäß Anspruch 7, **dadurch gekennzeichnet, daß** die Vorrichtung Mittel zum Bestimmen der Parameter a und b in Abhängigkeit vom polytropen Koeffizienten $\gamma$ des Zylinders, bestimmt als:

$$\gamma = \frac{-\log(P_1/P_2)}{\log(V_1/V_2)}$$

beinhaltet, wobei $P_1$ und $V_1$ den Druck und das Volumen des Zylinders in einem ersten Augenblick, und $P_2$ und $V_2$ den Druck und das Volumen des Zylinders in einem zweiten Augenblick mittels der Formeln:

$$a = \gamma/(\gamma\text{-}1)$$

$$b = 1/(\gamma-1)$$

darstellen.

**9.** Motor gemäß einem der vorhergehenden Ansprüche, **dadurch gekennzeichnet, daß** die Vorrichtung Mittel zum Regeln einer Vielzahl identischer Kraftstoffeinspritzungen, Mittel zum Messen einer jedem Einspritzvorgang eigentümlichen Wärmeabstrahlung, sowie Mittel zum Zuordnen einer Wärmeabstrahlung ($DQ_{mes}$) bei wiederholter Einspritzung entsprechend dem Mittelwert der bei jeder Einspritzung gemessenen Wärmeabstrahlung ($DQ_{mes}$) umfaßt.

**10.** Motor gemäß einem der vorhergehenden Ansprüche, **dadurch gekennzeichnet, daß** die Vorrichtung Mittel zum Abspeichern der gemessenen Wärmeabstrahlungen, z.B. in der Form einer kartographischen Darstellung in Abhängigkeit von der Dauer der Aktivierung der zum Bestimmen dieser Abstrahlung benutzten Einspritzdüse umfaßt.

**11.** Motor gemäß Anspruch 10, **dadurch gekennzeichnet, daß** bei Zuordnung einer gesteuerten Aktivierungsdauer zu einer vorbestimmten Wärmeabstrahlung die Vorrichtung Mittel zur Modifizierung einer gesteuerten Aktivierungsdauer in Abhängigkeit von dem Unterschied zwischen dieser letzteren und der benutzten Dauer zum Messen einer Wärmeabstrahlung umfaßt, die identisch mit der vorgegebenen Wärmeabstrahlung ist, die der gesteuerten Dauer zugeordnet wird.

**12.** Motor gemäß einem der vorhergehenden Ansprüche, **dadurch gekennzeichnet, daß** die Vorrichtung Mittel zum Messen einer Wärmeabstrahlung in Abhängigkeit von dem gesteuerten Einspritzdruck und der gesteuerten Kraftstoffmenge umfaßt.

**13.** Motor gemäß einem der vorhergehenden Ansprüche, **dadurch gekennzeichnet, daß** die Vorrichtung Mittel zum Verhindern einer Probeeinspritzung während eines Motorzyklus umfaßt, in dessen Verlauf eine Wärmeabstrahlung gemessen wird.

**14.** Motor gemäß einem der vorhergehenden Ansprüche, **dadurch gekennzeichnet, daß** er Mittel zum Regeln der Kraftstoffeinspritzungen über 10 mg umfaßt.

**15.** Motor gemäß einem der vorhergehenden Ansprüche, **dadurch gekennzeichnet, daß** er eine gemeinsame zufuhrleitung für die verschiedenen Zylinder aufweist.

**Claims**

**1.** Diesel engine provided with a device controlling the injection of fuel into a cylinder by means of a processor actuating an injector of the cylinder, **characterized in that** the device comprises means (802) for measuring an emission ($DQ_{mes}$) of heat generated by an initiated injection, means (808) for determining the difference between the set quantity of fuel and the quantity of fuel injected, evaluated from this measured emission and means (810) for actuating the injector as a function of this difference.

**2.** Engine according to claim 1, **characterized in that** the difference is determined by comparing the measured emission ($DQ_{mes}$) with a predetermined heat emission ($DQ_{pre}$).

**3.** Engine according to claim 1, **characterized in that** the difference is determined by comparing the quantity of fuel injected, determined from the measured heat emission, with the set quantity of fuel.

**4.** Engine according to claim 1, 2 or 3, **characterized in that** the device comprises means for measuring the emission of heat ($DQ_{mes}$) from measurements of the pressure inside the combustion chamber of the cylinder.

**5.** Engine according to claim 4, **characterized in that** the device comprises means for taking pressure measurements over a period during which the main injection of fuel into the cylinder occurs.

**6.** Engine according to claim 5, **characterized in that** the device comprises means for ensuring that the period corresponds to an advance of the engine cycle of at least sixty crankshaft degrees.

7. Engine according to one of the preceding claims, **characterized in that** the device comprises means for measuring the emission of heat ($DQ_{mes}$) from elementary emissions ($DQ_{mes}$) determined by means of the formula :

$$\frac{dQ}{d\alpha} = aV \frac{dP}{d\alpha} + bP \frac{dV}{d\alpha},$$

where dP represents a pressure variation in the combustion chamber of the cylinder, dV represents a variation in the volume of the combustion chamber, d$\alpha$ represents the advance of the operating cycle of the cylinder and a and b are parameters that are constant during the determination of heat emission ($DQ_{mes}$).

8. Engine according to claim 7, **characterized in that** the device comprises means for determining the parameters a and b as a function of the polytropic coefficient $\gamma$ of the cylinder defined as :

$$\gamma = \frac{-\log (P_1/P_2)}{\log (V_1/V_2)}$$

where $P_1$ and $V_1$ represent the pressure and volume of the cylinder at a first instant and $P_2$ and $V_2$ represent the pressure and volume of the cylinder at a second instant, by means of the formulae :

$$a = \gamma/(\gamma-1)$$

$$b = 1/\gamma-1)$$

9. Engine according to one of the preceding claims, **characterized in that** the device comprises means for initiating a plurality of identical fuel injections, means for measuring a heat emission relating to each injection and means for associating a heat emission ($DQ_{mes}$) to the repeated injection corresponding to the mean of the heat emissions ($DQ_{mes}$) measured at each injection.

10. Engine according to one of the preceding claims, **characterized in that** the device comprises means for memorizing the measured heat emissions, for example in the form of a chart, as a function of the period of activation of the injector used to determine this emission.

11. Engine according to claim 10, **characterized in that**, a set period of activation being associated with a predetermined heat emission, the device comprises means for modifying a set period of activation as a function of the difference between the latter and the period used for measuring a heat emission identical to the predetermined heat emission associated with the set period.

12. Engine according to one of the preceding claims, **characterized in that** the device comprises means for measuring a heat emission as a function of the set injection pressure and set quantity of fuel.

13. Engine according to one of the preceding claims, **characterized in that** the device comprises means for inhibiting a pilot injection during an engine cycle in the course of which a heat emission is measured.

14. Engine according to one of the preceding claims, **characterized in that** it comprises means for initiating fuel injections greater than 10 mg.

15. Engine according to one of the preceding claims, **characterized in that** it comprises a common manifold for supplying the different cylinders.

FIG.1

FIG.2

EP 1 429 009 B1

FIG.3

FIG.4

14

corrélation débit injecté/DQmoyen

FIG.5

Valeur du coefficient polytropique
en fonction du cylindre et du régime

FIG.6a

relation Dqmoyen corrigé / débit calculé

FIG.6b

relation Dqmoyen / débit calculé

FIG.6c

**FIG.7**

**FIG.8**

FIG.9

FIG.10

FIG.11

FIG.12